# FASCICULE DE BREVET EUROPEEN

(11) **EP 4 613 649 B1**
(45) Date de publication et mention de la délivrance du brevet: **11.11.2026**
(21) Numéro de dépôt: 25159209.3
(22) Date de dépôt: 20.02.2025
(51) Int. Cl.: B64D 27/40

(54) **STRUCTURE PRIMAIRE D'UN MÂT D'AÉRONEF COMPRENANT UNE SECTION TRANSVERSALE TRIANGULAIRE, AÉRONEF COMPORTANT AU MOINS UNE TELLE STRUCTURE PRIMAIRE**
PRIMÄRSTRUKTUR EINES FLUGZEUGPYLONS MIT DREIECKIGEM QUERSCHNITT, FLUGZEUG MIT MINDESTENS EINER SOLCHEN PRIMÄRSTRUKTUR
PRIMARY STRUCTURE OF AN AIRCRAFT PYLON COMPRISING A TRIANGULAR CROSS-SECTION, AIRCRAFT COMPRISING AT LEAST ONE SUCH PRIMARY STRUCTURE

(30) Priorité: 06.03.2024 FR 2402264
(43) Date de publication de la demande: 10.09.2025
(73) Titulaire: AIRBUS OPERATIONS (S.A.S.), 31060 Toulouse (FR)
(72) Inventeur: FUKASAKU, Kotaro, TOULOUSE (FR); VINCHES, Frédéric, TOULOUSE (FR); CZAPLA, Lionel, TOULOUSE (FR); AMARGIER, Rémi, TOULOUSE (FR)
(74) Mandataire: Fantin, Laurent

(56) Documents cités:
- FR-A1- 3 099 464
- FR-A1- 3 100 226
- FR-A1- 3 102 151
- FR-A1- 3 129 922
- US-A- 5 054 715
- US-B2- 9 010 680

## Description

La présente demande se rapporte à une structure primaire d'un mât d'aéronef comprenant une section transversale triangulaire ainsi qu'à un aéronef comportant au moins une telle structure primaire.

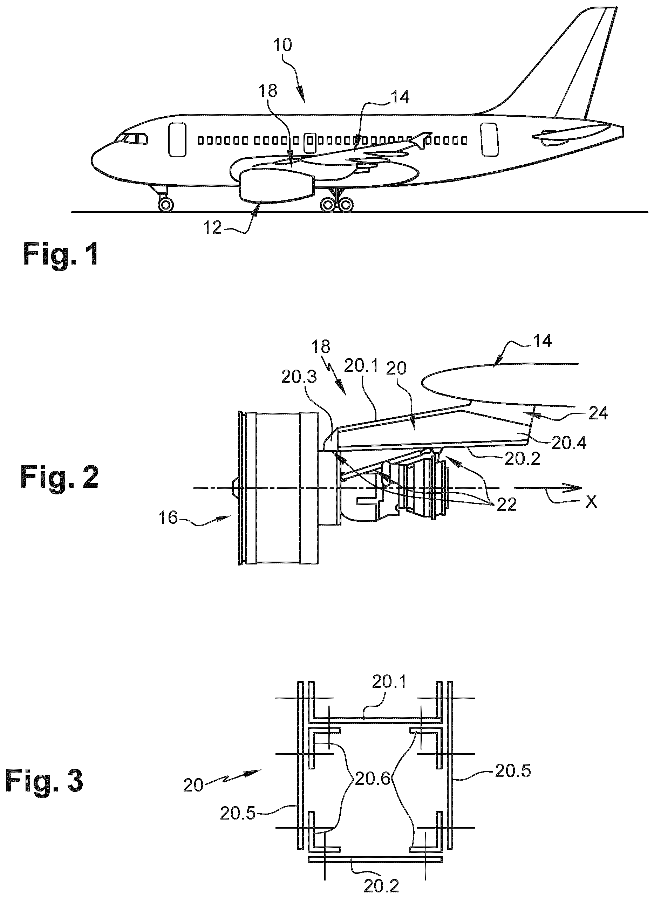

Selon un mode de réalisation de l'art antérieur visible sur les figures 1 et 2, un aéronef 10 comprend au moins un ensemble de propulsion 12 positionné sous chacune des ailes 14 de l'aéronef. Chaque ensemble de propulsion 12 comprend une motorisation 16, une nacelle (non représentée sur la figure 2) positionnée autour de la motorisation 16 ainsi qu'un mât 18 reliant la motorisation 16 et l'aile 14. Le mât 18 comprend une structure primaire 20 qui est reliée à la motorisation 16 par un système d'attache moteur 22 et à l'aile 14 par un système d'attache voilure 24.

La structure primaire 20 du mât 18 s'étend selon une direction longitudinale X. Un plan transversal est un plan perpendiculaire à la direction longitudinale X. Les termes avant/arrière font référence au sens d'écoulement des flux d'air, qui s'écoulent dans la motorisation 16 de l'avant vers l'arrière.

Comme illustré sur les figures 2 et 3, la structure primaire 20 est une structure en caisson creux, de section transversale rectangulaire, qui comporte un longeron supérieur 20.1, un longeron inférieur 20.2, des renforts intermédiaires disposés dans des plans transversaux, un renfort avant 20.3 qui relie les extrémités avant des longerons supérieur et inférieur 20.1, 20.2, un renfort arrière 20.4 qui relie les extrémités arrière des longerons supérieur et inférieur 20.1, 20.2, des panneaux latéraux 20.5 disposés de part et d'autre des renforts intermédiaires ainsi que quatre cornières 20.6 reliant chaque longeron 20.1, 20.2 à chaque panneau latéral 20.5.

Cette section transversale rectangulaire de la structure primaire 20 conduit à ce que la section transversale du mât soit relativement importante, notamment au niveau de son carénage arrière, et à ce que quasiment tous les équipements et systèmes situés au niveau du mât 18 soient positionnés à l'intérieur de la structure primaire 20, qui est une zone difficile d'accès. Les documents US5054715A, US9010680B2, FR3099464A1, FR3100226A1 et FR3102151A1 décrivent des structures primaires de mâts d'aéronefs selon l'art antérieur.

### EXPOSE DE L'INVENTION :

La présente invention vise à remédier à tout ou partie des inconvénients de l'art antérieur.

A cet effet, l'invention a pour objet une structure primaire d'un mât d'aéronef, ladite structure primaire s'étendant selon une direction longitudinale entre des première et deuxième extrémités, présentant un plan médian vertical et comprenant un longeron qui présente des bords latéraux droit et gauche positionnés de part et d'autre du plan médian vertical ainsi que des panneaux latéraux droit et gauche, positionnés de part et d'autre du plan médian vertical, qui présentent des premiers bords respectivement reliés aux bords latéraux droit et gauche du longeron et des deuxièmes bords.

Selon l'invention, les deuxièmes bords des panneaux latéraux droit et gauche sont jointifs de manière à délimiter une structure tubulaire avec une section transversale triangulaire.

La structure primaire comprend au moins une platine, configurée pour pouvoir fixer au moins une partie d'une attache voilure ou moteur et positionnée au niveau des deuxièmes bords des panneaux latéraux droit et gauche, ainsi que des renforts droit et gauche reliant respectivement les panneaux latéraux droit et gauche à la platine.

Chaque renfort droit et gauche comprend une première aile plaquée contre le panneau latéral droit ou gauche et reliée à ce dernier par des éléments de fixation, une deuxième aile plaquée contre la platine et reliée à cette dernière par des éléments de fixation ainsi qu'au moins une nervure reliant les première et deuxième ailes.

Cette forme triangulaire de la structure primaire permet de supprimer un longeron et les éventuelles cornières prévues pour le relier aux panneaux latéraux droit et gauche, ce qui permet de réduire la masse de la structure primaire.

De plus, la structure primaire ayant une section transversale triangulaire, il est possible de positionner sous le carénage du mât, de part et d'autre de la structure primaire, des systèmes et/ou des équipements (positionnés selon l'art antérieur dans la structure primaire). Le fait de positionner des systèmes et/ou des équipements en dehors de la structure primaire améliore leur accessibilité.

Selon une autre caractéristique, la structure primaire comprend au moins une patte de fixation solidaire du longeron et configurée pour pouvoir fixer au moins une partie d'une attache voilure ou moteur.

Selon un premier agencement, le longeron est positionné au-dessus des deuxièmes bords des panneaux latéraux droit et gauche. En complément, la structure primaire comprend au moins une platine proche de la première extrémité de la structure primaire, située au-dessous des deuxièmes bords des panneaux latéraux droit et gauche et configurée pour fixer au moins une attache moteur ainsi que plusieurs pattes de fixation solidaires du longeron, proches de la deuxième extrémité de la structure primaire et configurées pour fixer au moins une attache voilure.

Selon un autre agencement, le longeron est positionné au-dessous des deuxièmes bords des panneaux latéraux droit et gauche. En complément, la structure primaire comprend au moins une platine proche de la deuxième extrémité de la structure primaire, située au-dessus des deuxièmes bords des panneaux latéraux droit et gauche et configurée pour fixer au moins une attache voilure ainsi que plusieurs pattes de fixation solidaires du longeron, proches de la première extrémité de la structure primaire et configurées pour fixer au moins une attache moteur.

Selon une autre caractéristique, la structure primaire comprend au moins deux pièces distinctes formant le longeron ainsi que les panneaux droit et gauche, lesdites deux pièces étant assemblées de manière à former une structure tubulaire avec une section transversale triangulaire.

Selon une autre caractéristique, la structure primaire comprend un longeron ainsi que des panneaux latéraux droit et gauche distincts et assemblés deux à deux par des assemblages.

Selon une autre caractéristique, au moins un des assemblages comprend un rebord, solidaire d'une première pièce parmi le longeron et les panneaux latéraux droit et gauche, plaqué contre une deuxième pièce, différente de la première pièce parmi le longeron et les panneaux latéraux droit et gauche, ainsi que des éléments de liaison reliant le rebord et la deuxième pièce.

Selon une autre caractéristique, au moins un des assemblages comprend :
- une première extension solidaire d'une première pièce parmi le longeron et les panneaux latéraux droit et gauche,
- une deuxième extension solidaire d'une deuxième pièce, différente de la première pièce, parmi le longeron et les panneaux latéraux droit et gauche,
- des éléments de liaison reliant les première et deuxième extensions plaquées l'une contre l'autre.

Selon une autre caractéristique, au moins un des assemblages comprend :
- une première extension solidaire d'une première pièce parmi le longeron et les panneaux latéraux droit et gauche,
- une deuxième extension solidaire d'une deuxième pièce, différente de la première pièce, parmi le longeron et les panneaux latéraux droit et gauche,
- une platine de jonction plaquée contre les première et deuxième extensions,
- des éléments de liaisons reliant la platine et les première et deuxième extensions.

Selon une autre caractéristique, au moins un des assemblages comprend :
- au moins un premier orifice traversant prévu au niveau d'une première pièce parmi le longeron et les panneaux latéraux droit et gauche,
- au moins un deuxième orifice traversant, prévu au niveau d'une deuxième pièce différente de la première pièce parmi le longeron et les panneaux latéraux droit et gauche, aligné avec le premier orifice traversant,
- pour chaque couple de premier et deuxième orifices traversants alignés, un troisième élément de liaison, logé dans les premier et deuxième orifices traversants, reliant les première et deuxième pièces.

Selon une autre caractéristique, au moins un des assemblages comprend un cordon de soudure reliant une première pièce parmi le longeron et les panneaux latéraux droit et gauche ainsi qu'une deuxième pièce, différente de la première pièce, parmi le longeron et les panneaux latéraux droit et gauche.

L'invention a également pour objet un aéronef comprenant au moins une structure primaire selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue latérale d'un ensemble de propulsion d'aéronef sans sa nacelle illustrant un mode de réalisation de l'art antérieur,
- La figure 3 est une coupe transversale schématique d'une structure primaire d'un mât d'aéronef illustrant un mode de réalisation de l'art antérieur,
- La figure 4 est une vue en perspective schématique d'une structure primaire d'un mât d'aéronef illustrant une structure primaire triangulaire. Cette structure primaire ne fait pas partie de l'invention telle que revendiquée.
- La figure 5 est une vue en perspective schématique d'une structure primaire d'un mât d'aéronef illustrant une structure primaire triangulaire. Cette structure primaire ne fait pas partie de l'invention telle que revendiquée.
- La figure 6 est une coupe transversale schématique d'une structure primaire d'un mât d'aéronef illustrant une structure primaire triangulaire. Cette structure primaire ne fait pas partie de l'invention telle que revendiquée.
- La figure 7 est une vue en perspective d'une partie de la structure primaire visible sur la figure 6,
- La figure 8 est une coupe transversale schématique d'une structure primaire d'un mât d'aéronef illustrant une structure primaire triangulaire. Cette structure primaire ne fait pas partie de l'invention telle que revendiquée.
- La figure 9 est une coupe transversale schématique d'une structure primaire d'un mât d'aéronef illustrant une structure primaire triangulaire. Cette structure primaire ne fait pas partie de l'invention telle que revendiquée.
- La figure 10 est une coupe transversale schématique d'une structure primaire d'un mât d'aéronef illustrant une structure primaire triangulaire. Cette structure primaire ne fait pas partie de l'invention telle que revendiquée.
- La figure 11 est une coupe transversale schématique d'une structure primaire d'un mât d'aéronef illustrant une structure primaire triangulaire. Cette structure primaire ne fait pas partie de l'invention telle que revendiquée.
- La figure 12 est une coupe transversale schématique d'une structure primaire d'un mât d'aéronef illustrant une structure primaire triangulaire. Cette structure primaire ne fait pas partie de l'invention telle que revendiquée.
- La figure 13 est une vue en perspective d'une partie d'une structure primaire d'un mât d'aéronef illustrant un mode de réalisation de l'invention,
- La figure 14 est une coupe transversale d'une structure primaire d'un mât d'aéronef et d'une partie d'une attache moteur illustrant un mode de réalisation de l'invention,
- La figure 15 est une vue en perspective schématique d'une partie d'une structure primaire d'un mât d'aéronef illustrant une structure primaire triangulaire.

Cette structure primaire ne fait pas partie de l'invention telle que revendiquée.

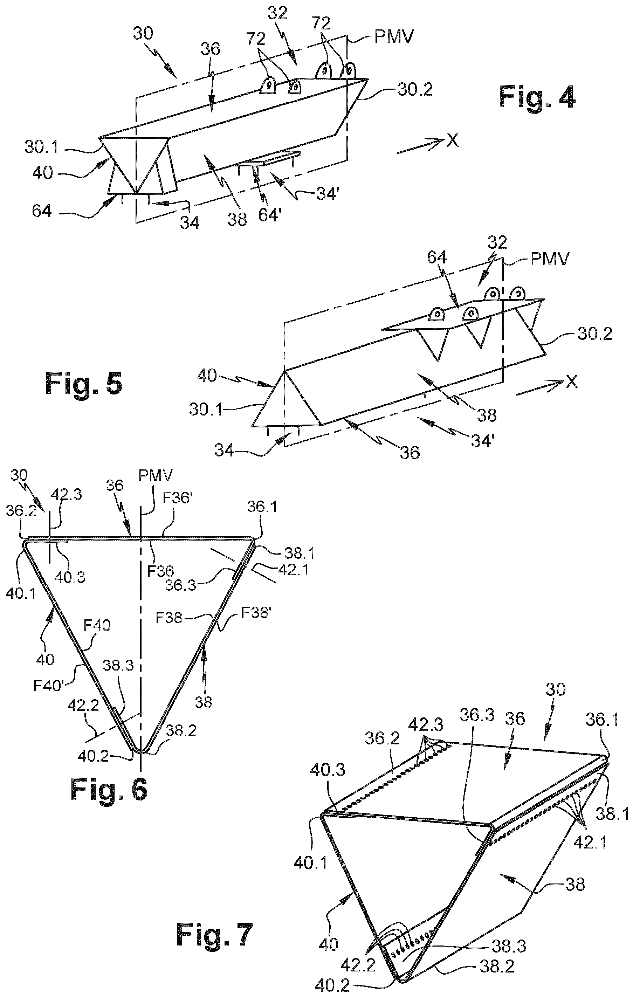

Selon des modes de réalisation visibles sur les figures 4 et 5, une structure primaire 30 s'étend selon une direction longitudinale X entre des première et deuxième extrémités 30.1, 30.2 positionnées respectivement à l'avant et l'arrière de la structure primaire 30. Cette structure primaire 30 présente au moins une zone d'ancrage voilure 32 configurée pour relier au moins une attache voilure à la structure primaire 30 ainsi qu'au moins une zone d'ancrage moteur 34 configurée pour relier au moins une attache moteur à la structure primaire 30. Selon une configuration, la structure primaire 30 présente une zone d'ancrage moteur avant 34 proche de sa première extrémité 30.1 ainsi qu'une zone d'ancrage moteur arrière 34' décalée vers la deuxième extrémité 30.2. En variante, la structure primaire 30 ne comprend qu'une unique zone d'ancrage moteur avant 34.

Selon une application, un aéronef comprend au moins une structure primaire 30 recouverte par au moins un carénage de manière à former un mât d'aéronef, ladite structure primaire 30 reliant une voilure et une motorisation de l'aéronef.

La structure primaire 30 présente un plan médian vertical PMV sensiblement vertical et parallèle à la direction longitudinale X.

La structure primaire 30 comprend un longeron 36, qui s'étend de la première extrémité 30.1 jusqu'à la deuxième extrémité 30.2 de la structure primaire 30 entre des bords latéraux droit et gauche 36.1, 36.2 positionnés de part et d'autre du plan médian vertical PMV, ainsi que des panneaux latéraux droit et gauche 38, 40, positionnés de part et d'autre du plan médian vertical PMV, qui s'étendent de la première extrémité 30.1jusqu'à la deuxième extrémité 30.2 de la structure primaire 30 ; les panneaux latéraux droit et gauche 38, 40 présentant des premiers bords 38.1, 40.1 respectivement reliés aux bords latéraux droit et gauche 36.1, 36.2 du longeron 36 ainsi que des deuxièmes bords 38.2, 40.2 jointifs au niveau du plan médian vertical PMV.

Comme illustré en détails sur la figure 6, le longeron 36 présente une face intérieure F36 orientée vers les panneaux latéraux droit et gauche 38, 40 ainsi qu'une face extérieure F36' opposée à la face intérieure F36. Chacun des panneaux latéraux droit et gauche 38, 40 présente une face intérieure F38, F40 orientée vers le longeron 36 ainsi qu'une face extérieure F38', F40' opposée à la face intérieure F38, F40.

Selon un agencement, le longeron 36 comprend une pièce qui s'étend d'une extrémité à l'autre de la structure primaire 30. En variante, le longeron 36 comprend plusieurs pièces reliées entre elles de manière à s'étendre de la première extrémité 30.1 jusqu'à la deuxième extrémité 30.2 de la structure primaire 30.

De la même manière, chaque panneau latéral droit ou gauche 38, 40 peut comprendre une seule pièce qui s'étend d'une extrémité à l'autre de la structure primaire 30 ou plusieurs pièces reliées entre elles de manière à s'étendre de la première extrémité 30.1 jusqu'à la deuxième extrémité 30.2 de la structure primaire 30.

Le longeron 36 est sensiblement perpendiculaire au plan médian vertical PMV.

Selon un premier mode de réalisation visible sur la figure 4, le longeron 36 est dit supérieur et positionné au-dessus des deuxièmes bords 38.2, 40.2 des panneaux latéraux droit et gauche 38, 40 reliés entre eux.

Selon un deuxième mode de réalisation visible sur la figure 5, le longeron 36 est dit inférieur et positionné au-dessous des deuxièmes bords 38.2, 40.2 des panneaux latéraux droit et gauche 38, 40 reliés entre eux.

Quel que soit le mode de réalisation, la structure primaire 30 présente une section transversale triangulaire.

Selon une configuration, la section transversale triangulaire de la structure primaire 30 est constante entre les première et deuxième extrémités 30.1, 30.2 de la structure primaire 30. Dans ce cas, les bords latéraux droit et gauche 36.1, 36.2 du longeron 36 sont parallèles entre eux et au plan médian vertical PMV.

Selon une autre configuration, la section transversale triangulaire de la structure primaire n'est pas constante entre les première et deuxième extrémités 30.1, 30.2 de la structure primaire 30. A titre d'exemple, la section transversale triangulaire augmente de la première extrémité 30.1 vers la deuxième extrémité 30.2. Dans ce cas, les bords latéraux droit et gauche 36.1, 36.2 s'évasent à s'écartant de la première extrémité 30.1.

Selon un agencement, la structure primaire 30 est approximativement symétrique par rapport au plan médian vertical PMV.

Selon un premier mode d'assemblage visible sur les figures 6 et 7, le longeron 36 comprend un premier rebord 36.3 au niveau du bord latéral droit 36.1, plaqué contre la face intérieure F38 du panneau latéral droit 38 et relié à ce dernier par des premiers éléments de liaison 42.1 positionnés le long du premier bord 38.1 du panneau latéral droit 38. Le panneau latéral droit 38 comprend un deuxième rebord 38.3 au niveau de son deuxième bord 38.2, plaqué contre la face intérieure F40 du panneau latéral gauche 40 et relié à ce dernier par des deuxièmes éléments de liaison 42.2 positionnés le long du deuxième bord 40.2 du panneau latéral gauche 40. En complément, le panneau latéral gauche 40 comprend un troisième rebord 40.3 au niveau de son premier bord 40.1, plaqué contre la face intérieure F36 du longeron 36 et relié à ce dernier par des troisièmes éléments de liaison 42.3 positionnés le long du bord latéral gauche 36.2 du longeron.

Selon un autre mode de réalisation non représenté, le longeron 36 comprend un premier rebord au niveau du bord latéral gauche 36.2, plaqué contre la face intérieure F40 du panneau latéral gauche 40 et relié à ce dernier par des premiers éléments de liaison positionnés le long du premier bord 40.1 du panneau latéral gauche 40. Le panneau latéral gauche 40 comprend un deuxième rebord au niveau de son deuxième bord 40.2, plaqué contre la face intérieure F38 du panneau latéral droit 38 et relié à ce dernier par des deuxièmes éléments de liaison positionnés le long du deuxième bord 38.2 du panneau latéral droit 38. En complément, le panneau latéral droit 38 comprend un troisième rebord au niveau de son premier bord 38.1, plaqué contre la face intérieure F36 du longeron 36 et relié à ce dernier par des troisièmes éléments de liaison positionnés le long du bord latéral droit 36.1 du longeron 36.

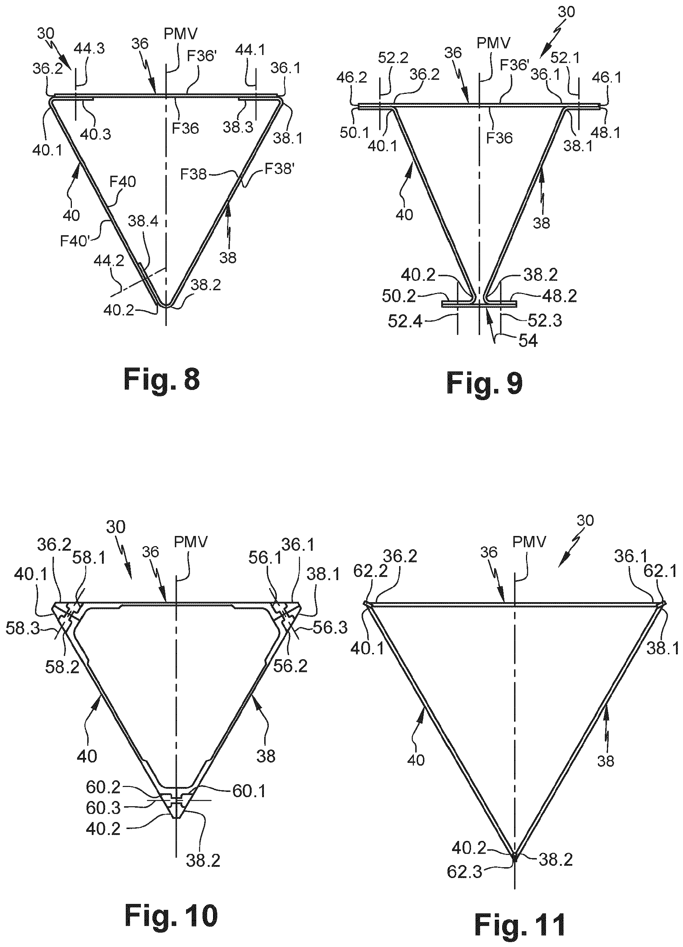

Selon un autre mode d'assemblage visible sur la figure 8, le panneau latéral droit 38 comprend un premier bord 38.3 au niveau de son premier bord 38.1, plaqué contre la face intérieure F36 du longeron 36 et relié à ce dernier par des premiers éléments de liaison 44.1 positionnés le long du bord latéral droit 36.1 du longeron 36 ainsi qu'un deuxième rebord 38.4 au niveau de son deuxième bord 38.2, plaqué contre la face intérieure F40 du panneau latéral gauche 40 et relié à ce dernier par des deuxièmes éléments de liaison 44.2 positionnés le long du deuxième bord 40.2 du panneau latéral gauche 40. En complément, le panneau latéral gauche 40 comprend un troisième rebord 40.3 au niveau de son premier bord 40.1, plaqué contre la face intérieure F36 du longeron 36 et relié à ce dernier par des troisièmes éléments de liaison 44.3 positionnés le long du bord latéral gauche 36.2 du longeron 36.

Selon un autre mode d'assemblage visible sur la figure 9, le longeron 36 comprend des extensions droite et gauche 46.1, 46.2 dans le prolongement respectivement des bords latéraux droit et gauche 36.1, 36.2, les extensions droite et gauche 46.1, 46.2 étant coplanaires avec le reste du longeron 36. Chacun des panneaux latéraux droit et gauche 38, 40 comprend des première et deuxième extensions 48.1, 50.1, 48.2, 50.2 dans le prolongement respectivement des premier et deuxième bords 38.1, 38.2, la première extension 48.1 du panneau latéral droit 38 étant plaquée contre l'extension droite 46.1 du longeron 36 et reliée à cette dernière par des premiers éléments de liaison 52.1, la première extension 50.1 du panneau latéral gauche 40 étant plaquée contre l'extension gauche 46.2 du longeron 36 et reliée à cette dernière par des deuxièmes éléments de liaison 52.2.

Selon une configuration non représentée, les deuxièmes extensions 48.2, 50.2 sont plaquées l'une contre l'autre au niveau du plan médian vertical PMV et reliées entre elles par des troisièmes éléments de liaison.

Selon une autre configuration visible sur la figure 9, les deuxièmes extensions 48.2, 50.2 des panneaux latéraux droit et gauche 38, 40 sont positionnées dans un plan sensiblement parallèle au longeron 36. En complément, la structure primaire 30 comprend une platine de jonction 54 plaquée contre les deuxièmes extensions 48.2, 50.2 des panneaux latéraux droit et gauche 38, 40 et reliée à chacune d'elles par des troisièmes et quatrièmes éléments de liaisons 52.3, 52.4 positionnés de part et d'autre du plan médian vertical PMV.

Selon un autre mode d'assemblage visible sur la figure 10, le bord latéral droit 36.1 du longeron 36 présente des premiers orifices traversants 56.1, répartis selon la direction longitudinale X, alignés avec des deuxièmes orifices traversants 56.2 situés au niveau du premier bord 38.1 du panneau latéral droit 38. Pour chaque couple de premier et deuxième orifices traversants 56.1, 56.2 alignés, la structure primaire 30 comprend un premier élément de liaison 56.3 (matérialisé par un trait d'axe), comme un boulot ou un rivet par exemple, logé dans les premier et deuxième orifices traversants 56.1, 56.2 et reliant le longeron 36 ainsi que le panneau latéral droit 38.

En complément, le bord latéral gauche 36.2 du longeron 36 présente des premiers orifices traversants 58.1, répartis selon la direction longitudinale X, alignés avec des deuxièmes orifices traversants 58.2 situés au niveau du premier bord 40.1 du panneau latéral gauche 40. Pour chaque couple de premier et deuxième orifices traversants 58.1, 58.2 alignés, la structure primaire 30 comprend un deuxième élément de liaison 58.3 (matérialisé par un trait d'axe), comme un boulot ou un rivet par exemple, logé dans les premier et deuxième orifices traversants 58.1, 58.2 et reliant le longeron 36 ainsi que le panneau latéral gauche 40.

Enfin, le deuxième bord 38.2 du panneau latéral droit 38 présente des premiers orifices traversants 60.1, répartis selon la direction longitudinale X, alignés avec des deuxièmes orifices traversants 60.2 situés au niveau du deuxième bord 40.2 du panneau latéral gauche 40. Pour chaque couple de premier et deuxième orifices traversants 60.1, 60.2 alignés, la structure primaire 30 comprend un troisième élément de liaison 60.3 (matérialisé par un trait d'axe), comme un boulot ou un rivet par exemple, logé dans les premier et deuxième orifices traversants 60.1, 60.2 et reliant les panneaux latéraux droit et gauche 38, 40.

Selon un autre mode d'assemblage visible sur la figure 11, le bord latéral droit 36.1 du longeron 36 et le premier bord 38.1 du panneau latéral droit 38 sont reliés par soudage, notamment par un premier cordon de soudure 62.1 qui s'étend, de manière continue ou discontinue, de la première extrémité 30.1 jusqu'à la deuxième extrémité 30.2 de la structure primaire 30. En complément, le bord latéral gauche 36.2 du longeron 36 et le premier bord 40.1 du panneau latéral gauche 40 sont reliés par soudage, notamment par un deuxième cordon de soudure 62.2 qui s'étend, de manière continue ou discontinue, de la première extrémité 30.1 jusqu'à la deuxième extrémité 30.2 de la structure primaire 30. Enfin les deuxièmes bords 38.2, 40.2 des panneaux latéraux droit et gauche 38, 40 sont reliés par soudage, notamment par un troisième cordon de soudure 62.3 qui s'étend, de manière continue ou discontinue, de la première extrémité 30.1 jusqu'à la deuxième extrémité 30.2 de la structure primaire 30.

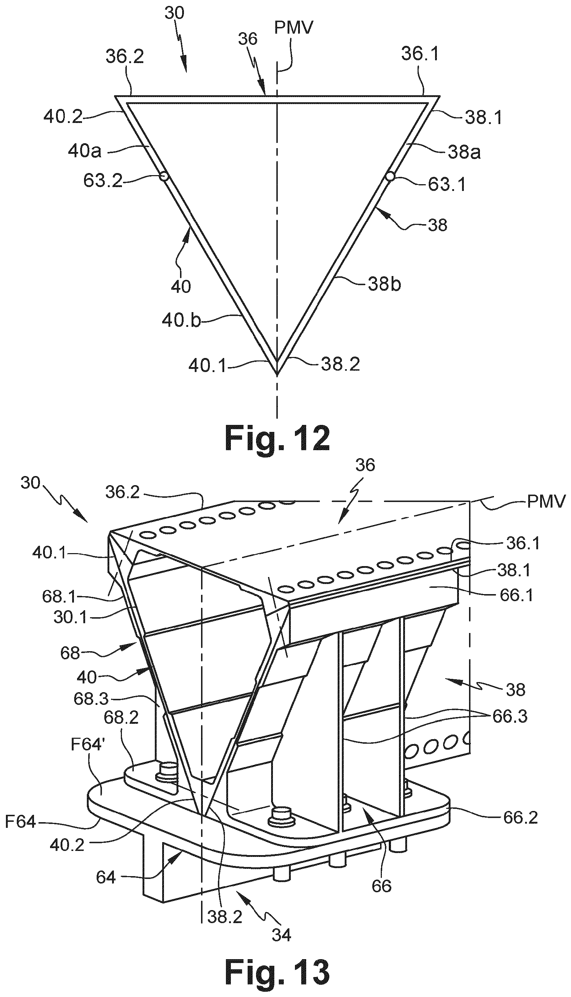

Selon un autre mode d'assemblage visible sur la figure 12, les panneaux latéraux droit et gauche 38, 40 comprennent chacun des première et deuxième parties 38a/38b, 40a/40b reliées par soudage, notamment par des cordons de soudure 63.1, 63.2 qui s'étendent, de manière continue ou discontinue, de la première extrémité 30.1 jusqu'à la deuxième extrémité 30.2 de la structure primaire 30. Selon ce mode de réalisation, le longeron 36 ainsi que les premières parties 38a, 40a des panneaux latéraux droit et gauche 38, 40 forment une unique et même pièce. En complément, les deuxièmes parties 38b, 40b des panneaux latéraux droit et gauche 38, 40 forment une unique et même pièce. Plus généralement, au moins un élément parmi le longeron 36, les panneaux latéraux droit et gauche 36, 38, 40 comprend plusieurs parties 38a/38b, 40a/40b reliées par au moins un cordon de soudure 63.1, 63.2.

Bien entendu, l'invention n'est pas limitée aux modes d'assemblage précédemment décrits. Selon un mode de réalisation simplifié, la structure primaire 30 ne comprend qu'une seule pièce formant le longeron, les panneaux latéraux droit et gauche 36, 38, 40 et délimitant une structure tubulaire avec une section transversale triangulaire. A titre d'exemple, une telle structure primaire 30 est obtenue par un procédé de fabrication additive, par un procédé d'enroulement filamentaire ou par un procédé de pliage d'une pièce plane et d'assemblage pour que la pièce pliée forme une structure tubulaire.

Selon d'autres modes de réalisation, la structure primaire 30 comprend au moins deux pièces distinctes formant le longeron ainsi que les panneaux droit et gauche 36, 38, 40, lesdites deux pièces étant assemblées de manière à former une structure tubulaire avec une section transversale triangulaire. Selon des modes de réalisation visibles sur les figures 6 à 12, la structure primaire 30 comprend un longeron 36 ainsi que des panneaux latéraux droit et gauche 38, 40 distincts et assemblés deux à deux par des assemblages (soudage, rivetage, boulonnage ou autres), chacune des pièces parmi le longeron, les panneaux latéraux droit et gauche 36, 38, 40 étant réalisées d'un seul tenant ou en plusieurs parties assemblées (par soudage, rivetage, boulonnage ou autres).

Selon un mode de réalisation visible sur les figures 6 à 8, au moins un des assemblages comprend un rebord 36.3, 38.3, 38.4, 40.3 solidaire d'une première pièce parmi le longeron 36 et les panneaux latéraux droit et gauche 38, 40, ledit rebord 36.3, 38.3, 38.4, 40.3 étant plaqué contre une deuxième pièce différente de la première pièce parmi le longeron 36 et les panneaux latéraux droit et gauche 38, 40, l'assemblage comportant des éléments de liaison 42.1, 42.2, 42.3, 44.1, 44.2, 44.3 reliant le rebord 36.3, 38.3, 38.4, 40.1 et la deuxième pièce.

Selon un autre mode de réalisation, au moins un des assemblages comprend :
- une première extension 46.1, 46.2, 48.1, 48.2, 50.1, 50.2 solidaire d'une première pièce parmi le longeron 36 et les panneaux latéraux droit et gauche 38, 40,
- une deuxième extension 46.1, 46.2, 48.1, 48.2, 50.1, 50.2 solidaire d'une deuxième pièce, différente de la première pièce, parmi le longeron 36 et les panneaux latéraux droit et gauche 38, 40,
- des éléments de liaison 52.1, 52.2 reliant les première et deuxième extensions plaquées l'une contre l'autre.

Selon un autre mode de réalisation visible sur la figure 9, au moins un des assemblages comprend :
- une première extension 46.1, 46.2, 48.1, 48.2, 50.1, 50.2 solidaire d'une première pièce parmi le longeron 36 et les panneaux latéraux droit et gauche 38, 40,
- une deuxième extension 46.1, 46.2, 48.1, 48.2, 50.1, 50.2 solidaire d'une deuxième pièce, différente de la première pièce, parmi le longeron 36 et les panneaux latéraux droit et gauche 38, 40,
- une platine de jonction 54 plaquée contre les première et deuxième extensions,
- des éléments de liaisons 52.3, 52.4 reliant la platine de jonction 54 ainsi que les première et deuxième extensions.

Selon un autre mode de réalisation visible sur la figure 10, au moins un des assemblages comprend :
- au moins un premier orifice traversant 56.1, 58.1, 60.1 prévu au niveau d'une première pièce parmi le longeron 36 et les panneaux latéraux droit et gauche 38, 40,
- au moins un deuxième orifice traversant 56.2, 58.2, 60.2 prévu au niveau d'une deuxième pièce, différente de la première pièce parmi le longeron 36 et les panneaux latéraux droit et gauche 38, 40, aligné avec le premier orifice traversant 56.1, 58.1, 60.1,
- pour chaque couple de premier et deuxième orifices traversants 56.1, 56.2, 58.1, 58.2, 60.1, 60.2 alignés, un troisième élément de liaison 56.3, 58.3, 60.3 logé dans les premier et deuxième orifices traversants 56.1, 56.2, 58.1, 58.2, 60.1, 60.2 et reliant les première et deuxième pièces.

Selon un autre mode de réalisation visible sur la figure 11, au moins un des assemblages comprend un cordon de soudure 62.1, 62.2, 62.3 reliant une première pièce parmi le longeron 36 et les panneaux latéraux droit et gauche 38, 40 ainsi qu'une deuxième pièce, différente de la première pièce parmi le longeron 36 et les panneaux latéraux droit et gauche 38, 40.

Une structure primaire 30 peut comprendre des assemblages de même nature ou une combinaison des assemblages précédemment décrits.

La structure primaire 30 peut comprendre des renforts intermédiaires positionnés dans des plans transversaux, entre le longeron 36 et les panneaux latéraux droit et gauche 38, 40.

Les longerons 36 ainsi que les panneaux latéraux droit et gauche 38, 40 peuvent être métalliques ou en matériau composite. Ils peuvent se présenter sous la forme de tôles avec des épaisseurs constantes ou de plaques avec des épaisseurs variables.

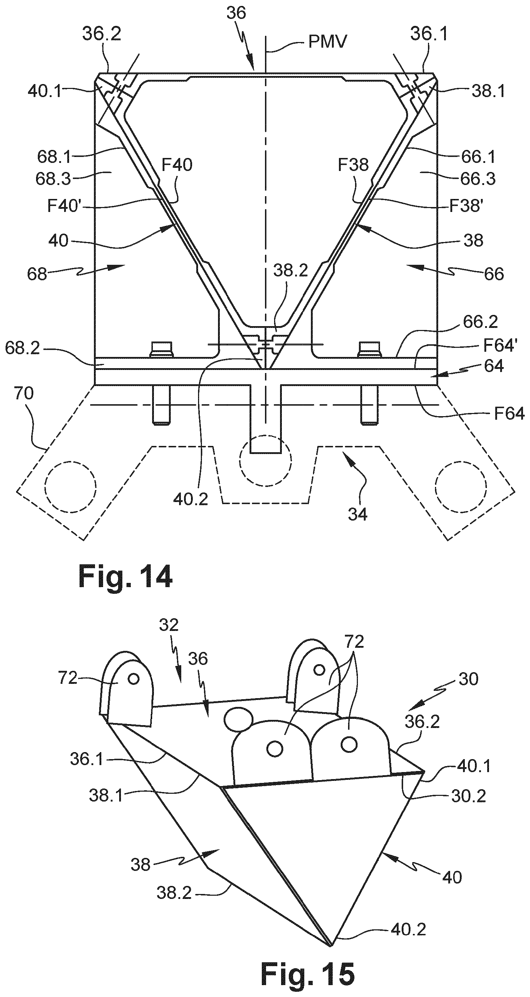

Selon un mode de réalisation visible sur les figures 13 et 14, la structure primaire 30 comprend au moins une platine 64, située au niveau d'une zone d'ancrage voilure ou moteur 32, 34 et positionnée au niveau des deuxièmes bords 38.2, 40.2 des panneaux latéraux droit et gauche 38, 40, ainsi que des renforts droit et gauche 66, 68 reliant respectivement les panneaux latéraux droit et gauche 38, 40 et la platine 64. Cette dernière est configurée pour pouvoir y fixer au moins une partie d'une attache voilure ou moteur 70 représentée en pointillés sur la figure 14.

Selon une configuration, cette platine 64 est sensiblement perpendiculaire au plan médian vertical PMV et s'étend de part et d'autre de ce dernier.

Cette platine 64 présente une surface de contact F64 opposée aux panneaux latéraux droit et gauche 38, 40 et offrant une surface d'appui pour l'attache moteur ou voilure 70 ainsi qu'une surface de jonction F64' opposée à la surface de contact F64 et orientée vers les panneaux latéraux droit et gauche 38, 40

Selon un mode de réalisation, chaque renfort droit et gauche 66, 68 comprend une première aile 66.1, 68.1 plaquée contre la face extérieure F38', F40' du panneau latéral droit ou gauche 38, 40 et reliée à ce dernier par des éléments de fixation, une deuxième aile 66.2, 68.2 plaquée contre la surface de jonction F64' de la platine 64 et reliée à cette dernière par des éléments de fixation ainsi qu'au moins une nervure 66.3, 68.3 reliant les première et deuxième ailes 66.1, 68.1, 66.2, 68.2. Selon une configuration non limitative visible sur la figure 13, chaque renfort droit ou gauche 66, 68 présente deux nervures.

Bien entendu, l'invention n'est pas limitée à ces modes de réalisation pour la platine 64 et les renforts droit et gauche 66, 68.

Selon un mode de réalisation visible sur la figure 15, la structure primaire 30 comprend au moins une patte de fixation 72 solidaire du longeron 36, en saillie par rapport à sa face extérieure F36', située au niveau d'une zone d'ancrage voilure ou moteur 32, 34 et configurée pour pouvoir y fixer au moins une partie d'une attache voilure ou moteur. Selon une configuration, la structure primaire 30 comprend plusieurs pattes de fixation 72.

Selon un agencement visible sur les figures 4, 13 à 15, la structure primaire 30 comprend un longeron 36 positionné au-dessus des deuxièmes bords 38.2, 40.2 des panneaux latéraux droit et gauche 38, 40 reliés entre eux. Dans ce cas, la structure primaire 30 comprend au moins une platine 64 située au-dessous des deuxièmes bords 38.2, 40.2 des panneaux latéraux droit et gauche 38, 40 dans une zone d'ancrage moteur 34, ladite platine 64 étant configurée pour fixer au moins une attache moteur. Cette platine 64 est positionnée proche de la première extrémité 30.1 de la structure primaire 30 et configurée pour fixer au moins une attache moteur. Selon un mode de réalisation visible sur la figure 4, la structure primaire 30 comprend deux platines 64, 64', une première platine 64 située au niveau de la première extrémité 30.1 de la structure primaire 30 ainsi qu'une deuxième platine 64' écartée des première et deuxième extrémités 30.1, 30.2 de la structure primaire 30.

Selon l'agencement visible sur les figures 4, 13 à 15, la structure primaire 30 comprend plusieurs pattes de fixation 72 solidaires du longeron 36 et situées dans une zone d'ancrage voilure 32, proches de la deuxième extrémité 30.2 de la structure primaire 30 et configurées pour y fixer au moins une attache voilure.

Selon un autre agencement visible sur la figure 5, la structure primaire 30 comprend un longeron 36 positionné au-dessous des deuxièmes bords 38.2, 40.2 des panneaux latéraux droit et gauche 38, 40 reliés entre eux. Dans ce cas, la structure primaire 30 comprend au moins une platine 64 située au-dessus des deuxièmes bords 38.2, 40.2 des panneaux latéraux droit et gauche 38, 40, dans une zone d'ancrage voilure 32. Cette platine 64 est positionnée proche de la deuxième extrémité 30.2 de la structure primaire 30 et configurée pour fixer au moins une attache voilure. En complément, la structure primaire 30 comprend plusieurs pattes de fixation 72 solidaires du longeron 36, situées dans au moins une zone d'ancrage moteur 34, proches de la première extrémité 30.1 de la structure primaire 30 et configurées pour fixer au moins une attache moteur.

Quel que soit le mode de réalisation et l'agencement, la section transversale triangulaire de la structure primaire 30 permet de supprimer un longeron et les éventuelles cornières prévues pour le relier aux panneaux latéraux droit et gauche, ce qui permet de réduire la masse de la structure primaire 30.

Selon un autre avantage, le fait de prévoir une section transversale triangulaire permet de positionner des systèmes et/ou des équipements (positionnés selon l'art antérieur dans la structure primaire 30) en dehors de la structure primaire 30 dans des zones situées de part et d'autre de la structure primaire au droit des deuxièmes bords 38.2, 40.2 des panneaux latéraux droit et gauche 38, 40. Le fait de positionner des systèmes et/ou des équipements en dehors de la structure primaire 30 améliore leur accessibilité.

Selon un autre avantage, lorsque la pointe de la section transversale triangulaire est orientée vers le bas, comme illustré notamment sur la figure 4, cela permet de réduire la longueur de la zone du carénage arrière du mât décalée vers l'arrière par rapport à la motorisation.

## Revendications

1. Structure primaire (30) d'un mât d'aéronef, ladite structure primaire (30) s'étendant selon une direction longitudinale entre des première et deuxième extrémités (30.1, 30.2), présentant un plan médian vertical (PMV) et comprenant un longeron (36) qui présente des bords latéraux droit et gauche (36.1, 36.2) positionnés de part et d'autre du plan médian vertical (PMV) ainsi que des panneaux latéraux droit et gauche (38, 40) positionnés de part et d'autre du plan médian vertical (PMV) qui présentent des premiers bords (38.1, 40.1) respectivement reliés aux bords latéraux droit et gauche (36.1, 36.2) du longeron (36) et des deuxièmes bords (38.2, 40.2), les deuxièmes bords (38.2, 40.2) des panneaux latéraux droit et gauche (38, 40) étant jointifs de manière à délimiter une structure tubulaire avec une section transversale triangulaire,
la structure primaire (30) comprenant au moins une platine (64) configurée pour pouvoir fixer au moins une partie d'une attache voilure ou moteur (70) et positionnée au niveau des deuxièmes bords (38.2, 40.2) des panneaux latéraux droit et gauche (38, 40) ainsi que des renforts droit et gauche (66, 68) reliant respectivement les panneaux latéraux droit et gauche (38, 40) et la platine (64),
**caractérisée en ce que** chaque renfort droit et gauche (66, 68) comprend une première aile (66.1, 68.1) plaquée contre le panneau latéral droit ou gauche (38, 40) et reliée à ce dernier par des éléments de fixation, une deuxième aile (66.2, 68.2) plaquée contre la platine (64) et reliée à cette dernière par des éléments de fixation ainsi qu'au moins une nervure (66.3, 68.3) reliant les première et deuxième ailes (66.1, 68.1, 66.2, 68.2).

2. Structure primaire (30) d'un mât d'aéronef selon la revendication précédente, **caractérisée en ce que** la structure primaire (30) comprend au moins une patte de fixation (72) solidaire du longeron (36) et configurée pour pouvoir fixer au moins une partie d'une attache voilure ou moteur.

3. Structure primaire (30) d'un mât d'aéronef selon l'une des revendications précédentes, **caractérisée en ce que** le longeron (36) est positionné au-dessus des deuxièmes bords (38.2, 40.2) des panneaux latéraux droit et gauche (38, 40) et **en ce que** la structure primaire (30) comprend au moins une platine (64) proche de la première extrémité (30.1) de la structure primaire (30), située au-dessous des deuxièmes bords (38.2, 40.2) des panneaux latéraux droit et gauche (38, 40) et configurée pour fixer au moins une attache moteur ainsi que plusieurs pattes de fixation (72) solidaires du longeron (36), proches de la deuxième extrémité (30.2) de la structure primaire (30) et configurées pour fixer au moins une attache voilure.

4. Structure primaire (30) d'un mât d'aéronef selon l'une des revendications 1 ou 2, **caractérisée en ce que** le longeron (36) est positionné au-dessous des deuxièmes bords (38.2, 40.2) des panneaux latéraux droit et gauche (38, 40) et **en ce que** la structure primaire (30) comprend au moins une platine (64) proche de la deuxième extrémité (30.2) de la structure primaire (30), située au-dessus des deuxièmes bords (38.2, 40.2) des panneaux latéraux droit et gauche (38, 40) et configurée pour fixer au moins une attache voilure ainsi que plusieurs pattes de fixation (72) solidaires du longeron (36), proches de la première extrémité (30.1) de la structure primaire (30) et configurées pour fixer au moins une attache moteur.

5. Structure primaire (30) d'un mât d'aéronef selon l'une des revendications précédentes, **caractérisée en ce que** la structure primaire (30) comprend au moins deux pièces distinctes formant le longeron ainsi que les panneaux droit et gauche (36, 38, 40), lesdites deux pièces étant assemblées de manière à former une structure tubulaire avec une section transversale triangulaire.

6. Structure primaire (30) d'un mât d'aéronef selon la revendication précédente, **caractérisée en ce que** la structure primaire (30) comprend un longeron (36) ainsi que des panneaux latéraux droit et gauche (38, 40) distincts et assemblés deux à deux par des assemblages.

7. Structure primaire (30) d'un mât d'aéronef selon la revendication précédente, **caractérisée en ce qu'**au moins un des assemblages comprend un rebord (36.3, 38.3, 38.4, 40.3), solidaire d'une première pièce parmi le longeron (36) et les panneaux latéraux droit et gauche (38, 40) et plaqué contre une deuxième pièce différente de la première pièce parmi le longeron (36) et les panneaux latéraux droit et gauche (38, 40), ainsi que des éléments de liaison (42.1, 42.2, 42.3) reliant le rebord (36.3, 38.3, 38.4, 40.3) et la deuxième pièce.

8. Structure primaire (30) d'un mât d'aéronef selon l'une des revendications 6 à 7, **caractérisée en ce qu'**au moins un des assemblages comprend :
- une première extension (46.1, 46.2, 48.1, 48.2, 50.1, 50.2) solidaire d'une première pièce parmi le longeron (36) et les panneaux latéraux droit et gauche (38, 40),
- une deuxième extension (46.1, 46.2, 48.1, 48.2, 50.1, 50.2) solidaire d'une deuxième pièce, différente de la première pièce, parmi le longeron (36) et les panneaux latéraux droit et gauche (38, 40),
- des éléments de liaison (52.1, 52.2) reliant les première et deuxième extensions plaquées l'une contre l'autre.

9. Structure primaire (30) d'un mât d'aéronef selon l'une des revendications 6 à 8, **caractérisée en ce qu'**au moins un des assemblages comprend :
- une première extension (46.1, 46.2, 48.1, 48.2, 50.1, 50.2) solidaire d'une première pièce parmi le longeron (36) et les panneaux latéraux droit et gauche (38, 40),
- une deuxième extension (46.1, 46.2, 48.1, 48.2, 50.1, 50.2) solidaire d'une deuxième pièce, différente de la première pièce, parmi le longeron (36) et les panneaux latéraux droit et gauche (38, 40),
- une platine de jonction (54) plaquée contre les première et deuxième extensions,
- des éléments de liaisons (52.3, 52.4) reliant la platine de jonction (54) et les première et deuxième extensions.

10. Structure primaire (30) d'un mât d'aéronef selon l'une des revendications 6 à 9, **caractérisée en ce qu'**au moins un des assemblages comprend :
- au moins un premier orifice traversant (56.1, 58.1, 60.1) prévu au niveau d'une première pièce parmi le longeron (36) et les panneaux latéraux droit et gauche (38, 40),
- au moins un deuxième orifice traversant (56.2, 58.2, 60.2) prévu au niveau d'une deuxième pièce, différente de la première pièce, parmi le longeron (36) et les panneaux latéraux droit et gauche (38, 40) et aligné avec le premier orifice traversant (56.1, 58.1, 60.1),
- pour chaque couple de premier et deuxième orifices traversants (56.1, 56.2, 58.1, 58.2, 60.1, 60.2) alignés, un troisième élément de liaison (56.3, 58.3, 60.3) logé dans les premier et deuxième orifices traversants (56.1, 56.2, 58.1, 58.2, 60.1, 60.2) et reliant les première et deuxième pièces.

11. Structure primaire (30) d'un mât d'aéronef selon l'une des revendications 6 à 10, **caractérisée en ce qu'**au moins un des assemblages comprend un cordon de soudure (62.1, 62.2, 62.3) reliant une première pièce parmi le longeron (36) et les panneaux latéraux droit et gauche (38, 40) ainsi qu'une deuxième pièce, différente de la première pièce, parmi le longeron (36) et les panneaux latéraux droit et gauche (38, 40).

12. Aéronef comprenant au moins une structure primaire selon l'une des revendications précédentes.

## Patentansprüche

1. Primärstruktur (30) eines Masts eines Luftfahrzeugs, wobei sich die Primärstruktur (30) in Längsrichtung zwischen einem ersten und einem zweiten Ende (30.1, 30.2) erstreckt, eine vertikale Mittelebene (PMV) und einen Längsträger (36) aufweist, der einen rechten und einen linken Seitenrand (36.1, 36.2) aufweist, die beidseits der vertikalen Mittelebene (PMV) angeordnet sind, sowie rechte und linke Seitenwände (38, 40), die beidseits der vertikalen Mittelebene (PMV) angeordnet sind und erste Ränder (38.1, 40.1) aufweisen, die jeweils mit dem rechten und linken Seitenrand (36.1, 36.2) des Längsträgers (36) verbunden sind, sowie zweite Ränder (38.2, 40.2), wobei die zweiten Ränder (38.2, 40.2) der rechten und linken Seitenwände (38, 40) aneinanderstoßen, um eine röhrenförmige Struktur mit dreieckigem Querschnitt zu bilden,
wobei die Primärstruktur (30) wenigstens eine Platte (64) aufweist, die dazu eingerichtet ist, wenigstens das Befestigen eines Teils einer Tragflächen- oder Motoranbringung (70) zu ermöglichen, und die im Bereich der zweiten Ränder (38.2, 40.2) der rechten und linken Seitenwände (38, 40) angeordnet ist, sowie rechte und linke Verstärkungen (66, 68), die jeweils die rechte und linke Seitenwand (38, 40) mit der Platte (64) verbinden,
**dadurch gekennzeichnet, dass** die rechte und linke Verstärkung (66, 68) jeweils einen ersten Flügel (66.1, 68.1) aufweist, der an die rechte oder linke Seitenwand (38, 40) angesetzt und mit dieser über Befestigungselemente verbunden ist, sowie einen zweiten Flügel (66.2, 68.2), der an die Platte (64) angesetzt und mit dieser über Befestigungselemente verbunden ist, sowie wenigstens eine Rippe (66.3, 68.3), die den ersten und den zweiten Flügel (66.1, 68.1, 66.2, 68.2) verbindet.

2. Primärstruktur (30) eines Masts eines Luftfahrzeugs gemäß dem vorstehenden Anspruch, **dadurch gekennzeichnet, dass** die Primärstruktur (30) wenigstens eine Befestigungslasche (72) aufweist, die fest mit dem Längsträger (36) verbunden und dazu eingerichtet ist, wenigstens einen Teil einer Tragflächen- oder Motoranbringung zu befestigen.

3. Primärstruktur (30) eines Masts eines Luftfahrzeugs gemäß einem der vorstehenden Ansprüche, **dadurch gekennzeichnet, dass** der Längsträger (36) oberhalb der zweiten Ränder (38.2, 40.2) der rechten und linken Seitenwand (38, 40) angeordnet ist und dass die Primärstruktur (30) wenigstens eine Platte (64) nahe dem ersten Ende (30.1) der Primärstruktur (30) aufweist, die sich unterhalb der zweiten Ränder (38.2, 40.2) der rechten und linken Seitenwände (38, 40) befindet und dazu eingerichtet ist, wenigstens eine Motoranbringung zu befestigen, sowie mehrere mit dem Längsträger (36) verbundene Befestigungslaschen (72), die nahe dem zweiten Ende (30.2) der Primärstruktur (30) angeordnet und dazu eingerichtet sind, wenigstens eine Tragflächenanbringung zu befestigen.

4. Primärstruktur (30) eines Masts eines Luftfahrzeugs gemäß einem der Ansprüche 1 oder 2, **dadurch gekennzeichnet, dass** der Längsträger (36) unterhalb der zweiten Ränder (38.2, 40.2) der rechten und linken Seitenwände (38, 40) angeordnet ist und dass die Primärstruktur (30) wenigstens eine Platte (64) nahe dem zweiten Ende (30.2) der Primärstruktur (30) aufweist, die sich oberhalb der zweiten Ränder (38.2, 40.2) der rechten und linken Seitenwände (38, 40) befindet und dazu eingerichtet ist, wenigstens eine Tragflächenanbringung zu befestigen, sowie mehrere mit dem Längsträger (36) verbundene Befestigungslaschen (72), die nahe dem ersten Ende (30.1) der Primärstruktur (30) angeordnet und dazu eingerichtet sind, wenigstens eine Motoranbringung zu befestigen.

5. Primärstruktur (30) eines Masts eines Luftfahrzeugs gemäß einem der vorstehenden Ansprüche, **dadurch gekennzeichnet, dass** die Primärstruktur (30) wenigstens zwei separate Teile aufweist, die den Längsträger sowie die rechte und die linke Seitenwand (36, 38, 40) bilden, wobei diese beiden Teile so miteinander verbunden sind, dass sie eine rohrförmige Struktur mit dreieckigem Querschnitt bilden.

6. Primärstruktur (30) eines Masts eines Luftfahrzeugs gemäß dem vorstehenden Anspruch, **dadurch gekennzeichnet, dass** die Primärstruktur (30) einen Längsträger (36) sowie separate rechte und linke Seitenwände (38, 40) aufweist, die paarweise durch Verbindungen miteinander verbunden sind.

7. Primärstruktur (30) eines Masts eines Luftfahrzeugs gemäß dem vorstehenden Anspruch, **dadurch gekennzeichnet, dass** wenigstens eine der Verbindungen einen Randbereich (36.3, 38.3, 38.4, 40.3) aufweist, der fest mit einem ersten Bauteil, nämlich entweder dem Längsträger (36) oder der rechten oder linken Seitenwand (38, 40) verbunden ist und an ein zweites Bauteil, das sich von dem ersten Bauteil unterscheidet, nämlich entweder dem Längsträger (36) oder der rechten oder linken Seitenwand (38, 40) angesetzt ist, sowie Verbindungselemente (42.1, 42.2, 42.3), die den Randbereich (36.3, 38.3, 38.4, 40.3) mit dem zweiten Teil verbinden.

8. Primärstruktur (30) eines Masts eines Luftfahrzeugs gemäß einem der Ansprüche 6 bis 7, **dadurch gekennzeichnet, dass** wenigstens eine der Verbindungen umfasst:
- eine erste Verlängerung (46.1, 46.2, 48.1, 48.2, 50.1, 50.2), die fest mit einem ersten Teil, nämlich entweder dem Längsträger (36) oder der rechten oder linken Seitenwand (38, 40) verbunden ist,
- eine zweite Verlängerung (46.1, 46.2, 48.1, 48.2, 50.1, 50.2), die fest mit einem zweiten Teil, das vom ersten Teil verschieden ist, nämlich entweder dem Längsträger (36) oder der rechten und linken Seitenwand (38, 40) verbunden ist,
- Verbindungselemente (52.1, 52.2), die die erste und die zweite Verlängerung, die aneinander angesetzt sind, miteinander verbinden.

9. Primärstruktur (30) eines Masts eines Luftfahrzeugs gemäß einem der Ansprüche 6 bis 8, **dadurch gekennzeichnet, dass** wenigstens eine der Verbindungen umfasst:
- eine erste Verlängerung (46.1, 46.2, 48.1, 48.2, 50.1, 50.2), die fest mit einem dem ersten Teil, nämlich entweder dem Längsträger (36) und der rechten oder linken Seitenwand (38, 40) verbunden ist,
- eine zweite Verlängerung (46.1, 46.2, 48.1, 48.2, 50.1, 50.2), die fest mit einem zweiten Teil, das vom ersten Teil verschieden ist, nämlich entweder dem Längsträger (36) oder der rechten oder linken Seitenwand (38, 40) verbunden ist,
- eine Verbindungsplatte (54), die an die erste und die zweite Verlängerung angesetzt ist,
- Verbindungselemente (52.3, 52.4), die die Verbindungsplatte (54) mit der ersten und der zweiten Verlängerung verbinden.

10. Primärstruktur (30) eines Masts eines Luftfahrzeugs gemäß einem der Ansprüche 6 bis 9, **dadurch gekennzeichnet, dass** wenigstens eine der Verbindungen umfasst:
- wenigstens eine erste Durchgangsöffnung (56.1, 58.1, 60.1), die im Bereich von einem ersten Teil, nämlich entweder dem Längsträger (36) oder der rechten oder linken Seitenwand(38, 40) vorgesehen ist,
- wenigstens eine zweite Durchgangsöffnung (56.2, 58.2, 60.2), die im Bereich von einem zweiten Teil, das vom ersten Teil verschieden ist, nämlich entweder dem Längsträger (36) oder der rechten oder linken Seitenwand (38, 40) vorgesehen und mit der ersten Durchgangsöffnung (56.1, 58.1, 60.1) fluchtend ist,
- für jedes Paar aus einer ersten und einer zweiten fluchtenden Durchgangsöffnung (56.1, 56.2, 58.1, 58.2, 60.1, 60.2) ein drittes Verbindungselement (56.3, 58.3, 60.3), das in der ersten und der zweiten Durchgangsöffnung (56.1, 56.2, 58.1, 58.2, 60.1, 60.2) aufgenommen ist und das erste und das zweite Teil verbindet.

11. Primärstruktur (30) eines Masts eines Luftfahrzeugs gemäß einem der Ansprüche 6 bis 10, **dadurch gekennzeichnet, dass** wenigstens eine der Verbindungen eine Schweißnaht (62.1, 62.2, 62.3) umfasst, die ein erstes Bauteil, nämlich entweder den Längsträger (36) oder die rechte oder linke Seitenwand (38, 40), sowie ein zweites, vom ersten Bauteil verschiedenes Bauteil, nämlich entweder den Längsträger (36) oder die rechte oder linke Seitenwand (38, 40) verbindet.

12. Luftfahrzeug, das wenigstens eine Primärstruktur gemäß einem der vorstehenden Ansprüche aufweist.

## Claims

1. Primary structure (30) of an aircraft pylon, said primary structure (30) extending in a longitudinal direction between first and second ends (30.1, 30.2), having a vertical midplane (PMV) and comprising a spar (36) which has right and left lateral edges (36.1, 36.2) positioned one on each side of the vertical midplane (PMV) and right and left lateral panels (38, 40) positioned one on each side of the vertical midplane (PMV) which have first edges (38.1, 40.1) respectively connected to the right and left lateral edges (36.1, 36.2) of the spar (36) and second edges (38.2, 40.2), the second edges (38.2, 40.2) of the right and left lateral panels (38, 40) being contiguous with one another so as to delimit a tubular structure of triangular cross section,
the primary structure (30) comprising at least one mounting plate (64) configured to be able to secure at least part of a wing or engine mount (70) and positioned at the second edges (38.2, 40.2) of the right and left lateral panels (38, 40), and right and left reinforcers (66, 68) respectively connecting the right and left lateral panels (38, 40) and the mounting plate (64),
**characterized in that** each right and left reinforcer (66, 68) comprises a first flange (66.1, 68.1) pressed against the right or left lateral panel (38, 40) and connected thereto by fasteners, a second flange (66.2, 68.2) pressed against the mounting plate (64) and connected thereto by fasteners, and at least one rib (66.3, 68.3) connecting the first and second flanges (66.1, 68.1, 66.2, 68.2).

2. Primary structure (30) of an aircraft pylon according to the preceding claim, **characterized in that** the primary structure (30) comprises at least one fixing lug (72) secured to the spar (36) and configured to be able to secure at least part of a wing or engine mount.

3. Primary structure (30) of an aircraft pylon according to one of the preceding claims, **characterized in that** the spar (36) is positioned above the second edges (38.2, 40.2) of the right and left lateral panels (38, 40) and **in that** the primary structure (30) comprises at least one mounting plate (64) near to the first end (30.1) of the primary structure (30), situated below the second edges (38.2, 40.2) of the right and left lateral panels (38, 40) and configured to secure at least one engine mount as well as a plurality of fixing lugs (72) secured to the spar (36) near to the second end (30.2) of the primary structure (30) and configured to secure at least a wing mount.

4. Primary structure (30) of an aircraft pylon according to one of Claims 1 or 2, **characterized in that** the spar (36) is positioned below the second edges (38.2, 40.2) of the right and left lateral panels (38, 40) and **in that** the primary structure (30) comprises at least one mounting plate (64) near to the second end (30.2) of the primary structure (30), situated above the second edges (38.2, 40.2) of the right and left lateral panels (38, 40) and configured to secure at least one wing mount as well as a plurality of fixing lugs (72) secured to the spar (36) near to the first end (30.1) of the primary structure (30) and configured to secure at least an engine mount.

5. Primary structure (30) of an aircraft pylon according to one of the preceding claims, **characterized in that** the primary structure (30) comprises at least two distinct components that make up the spar and the right and left panels (36, 38, 40), said two components being assembled in such a way as to form a tubular structure of triangular cross section.

6. Primary structure (30) of an aircraft pylon according to the preceding claim, **characterized in that** the primary structure (30) comprises a spar (36) as well as right and left lateral panels (38, 40) which are distinct and assembled pairwise by assemblies.

7. Primary structure (30) of an aircraft pylon according to the preceding claim, **characterized in that** at least one of the assemblies comprises a border (36.3, 38.3, 38.4, 40.3) secured to a first component of either the spar (36) or the right and left lateral panels (38, 40) and pressed against a second component, different from the first component, from either the spar (36) or the right and left lateral panels (38, 40), and connecting elements (42.1, 42.2, 42.3) connecting the border (36.3, 38.3, 38.4, 40.3) and the second component.

8. Primary structure (30) of an aircraft pylon according to one of Claims 6 to 7, **characterized in that** at least one of the assemblies comprises:
- a first extension (46.1, 46.2, 48.1, 48.2, 50.1, 50.2) secured to a first component of either the spar (36) or the right and left lateral panels (38, 40),
- a second extension (46.1, 46.2, 48.1, 48.2, 50.1, 50.2) secured to a second component, different from the first component, of either the spar (36) or the right and left lateral panels (38, 40),
- connecting elements (52.1, 52.2) connecting the first and second extensions pressed against one another.

9. Primary structure (30) of an aircraft pylon according to one of Claims 6 to 8, **characterized in that** at least one of the assemblies comprises:
- a first extension (46.1, 46.2, 48.1, 48.2, 50.1, 50.2) secured to a first component of either the spar (36) or the right and left lateral panels (38, 40),
- a second extension (46.1, 46.2, 48.1, 48.2, 50.1, 50.2) secured to a second component, different from the first component, of either the spar (36) or the right and left lateral panels (38, 40),
- a joining plate (54) pressed against the first and second extensions,
- connecting elements (52.3, 52.4) connecting the joining plate (54) and the first and second extensions.

10. Primary structure (30) of an aircraft pylon according to one of Claims 6 to 9, **characterized in that** at least one of the assemblies comprises:
- at least a first through-orifice (56.1, 58.1, 60.1) made in a first component of either the spar (36) or the right and left lateral panels (38, 40),
- at least a second through-orifice (56.2, 58.2, 60.2) made in a second component, different from the first component, of either the spar (36) or the right and left lateral panels (38, 40) and aligned with the first through-orifice (56.1, 58.1, 60.1),
- for each pair of aligned first and second through-orifices (56.1, 56.2, 58.1, 58.2, 60.1, 60.2), a third connecting element (56.3, 58.3, 60.3) housed in the first and second through-orifices (56.1, 56.2, 58.1, 58.2, 60.1, 60.2) and connecting the first and second components.

11. Primary structure (30) of an aircraft pylon according to one of Claims 6 to 10, **characterized in that** at least one of the assemblies comprises a bead of welding (62.1, 62.2, 62.3) connecting a first component of either the spar (36) or the right and left lateral panels (38, 40) and a second component, different from the first component, of either the spar (36) or the right and left lateral panels (38, 40).

12. Aircraft comprising at least one primary structure according to one of the preceding claims.
